# FASCICULE DE BREVET EUROPEEN

(11) **EP 1 518 486 B1**
(45) Date de publication et mention de la délivrance du brevet: **04.11.2009**
(21) Numéro de dépôt: 03292381.5
(22) Date de dépôt: 26.09.2003
(51) Int. Cl.: A47J 39/00

(54) **Système d'obturation de fentes pratiquées dans une paroi verticale séparant deux compartiments**
Schützvorrichtung der Schlitze in einer Trennwand tweier kompartimenten
Blocking device of slots in a vertical wall which is separating two compartments

(43) Date de publication de la demande: 30.03.2005
(73) Titulaire: SOCAMEL S.A.S., F-38140 Renage (FR)
(72) Inventeur: Larribau, Léon, 69520 Grigny (FR)
(74) Mandataire: Littolff, Denis

(56) Documents cités:
- WO-A-00/54641

## Description

La présente invention concerne en premier lieu un système d'obturation de fentes pratiquées dans une paroi verticale séparant deux compartiments. Un tel système a notamment vocation à s'appliquer dans des chariots roulants de stockage de plateaux repas à distribuer dans les chambres d'un établissement par exemple de type hôpital, lesdits chariots constituant une autre partie de l'invention.

Ces chariots sont constitués principalement d'un container thermiquement isolé, dont le fond est équipé de roulettes permettant de les véhiculer dans l'établissement, et dont la partie supérieure comporte au moins un organe de préhension permettant à l'utilisateur de les guider. En partie interne, le container est composé de deux compartiments séparés par une paroi centrale faisant office de barrière thermique, car l'un des compartiments est maintenu à basse température alors que l'autre est chauffé.

Pour des raisons d'ordre pratique, la nourriture attribuée à un patient est en général disposée sur un unique plateau. Les aliments destinés à être réchauffés y sont regroupés sur un côté, alors que ceux qui doivent être maintenus à basse température sont disposés sur l'autre côté. La partie centrale du plateau est ensuite insérée dans une fente horizontale pratiquée dans la paroi de séparation entre les compartiments froid et chaud, de façon à ce que chaque mets se retrouve dans la zone thermiquement appropriée, et qu'il puisse être distribué à température de consommation.

La paroi centrale fait office de barrière thermique et doit permettre d'éviter tout transfert thermique intempestif entre les compartiments.

En général, le compartiment froid est ventilé, et maintenu à une température comprise entre 0 et 4° C. Le compartiment chaud, également ventilé, doit être maintenu à une température comprise entre 85 et 140° C. Ces températures sont imposées par des normes sanitaires très strictes qui fixent des seuils de température minimale côté chaud, et maximale côté froid, afin de garantir la sécurité alimentaire des denrées proposées. Selon ces normes, l'hygiène est assurée lorsque la température à coeur des aliments se monte à 63° C côté chaud, alors qu'elle n'est que de 8° C côté froid.

Pendant la phase de transport des plateaux repas vers leurs différentes destinations, le chariot est rempli d'un empilement de plateaux disposés sur des racks latéraux, dont la portion centrale est insérée dans lesdites fentes placées à intervalle régulier sur toute la hauteur de la paroi de séparation. Les plateaux sont, en général, séparés par une distance de l'ordre de 85 à 110 mm.

L'existence de ces fentes pose en soi un problème dans ce type de chariot, puisqu'elles favorisent évidemment les transferts thermiques entre les compartiments alors que les normes sanitaires les prohibent. Le problème est d'ailleurs potentiellement plus important en l'absence de plateau, par exemple lorsque la distribution a été entamée et que des plateaux manquent, laissant des fentes vides. Lorsqu'un plateau est inséré dans la fente, les transferts thermiques sont en principe plus limités mais subsistent car, compte tenu des contraintes thermiques, sanitaires (emploi de plastiques particuliers), de la fréquence d'utilisations etc..., il n'est pas possible d'envisager une liaison plateau / fente avec une tolérance d'insertion de nature à empêcher toute fuite.

Dans certains dispositifs utilisés par le passé, le problème des transferts thermiques en cas d'absence du plateau était résolu par l'usage d'obturateurs. Ceux-ci devaient systématiquement être mis en place par les opérateurs dès après l'extraction d'un plateau.

Pour tenter de répondre plus globalement au problème, c'est-à-dire également en présence de plateaux, certaines solutions ont proposé l'utilisation d'au moins un joint flexible de type jupe, apte à obturer les fentes en l'absence de plateaux, et reposant sur la surface des plateaux en leur présence, afin d'empêcher les transferts thermiques dans les deux situations possibles. Il a également été proposé des systèmes à guillotine interne, c'est-à-dire insérés dans le corps de la paroi, et tombant sous l'effet de la gravité au contact du bord intérieur de chaque fente ou de la surface du plateau.

Pour les solutions à joints, l'inconvénient majeur réside dans le fait que, selon les normes sanitaires, tous les éléments internes à ce type de chariot doivent pouvoir être nettoyés et vérifiés afin qu'une hygiène minimale soit respectée, ce qui n'est guère facile en l'occurrence. En sus, les matériaux utilisés à l'intérieur de ces chariots doivent être compatibles avec les normes alimentaires, ce qui n'est pas forcément compatible avec les fonctions que doivent assurer ces joints et surtout leur pérennité.

En fait, pour qu'un système réponde aux critères hygiéniques précités, il faut de préférence qu'il soit facilement démontable afin que l'intérieur du chariot soit intégralement nettoyable dans de bonnes conditions.

Dans ce sens, il a donc été proposé une solution avec guillotine fixée à la surface externe de la paroi, qui se soulève au moment de l'insertion du plateau, se remet au contact de la surface du plateau sous l'effet de son poids, et peut être démontée en vue de son nettoyage.

La solution existante nécessite cependant le démontage d'une pièce intermédiaire, à l'aide d'un outil, pour retirer la guillotine. Compte tenu des modes de fonctionnement employés par les utilisateurs habituels de ce type de chariot, une solution nécessitant le recours à un outil pour procéder au démontage puis au nettoyage doit être considérée comme contraignante et inappropriée. Les normes sanitaires et d'hygiène évoluent constamment, à un rythme que l'inertie des habitudes et des comportements ne permet pas de suivre, d'autant moins que les processus permettant de les satisfaire sont contraignants. Pour avoir une chance que les utilisateurs nettoient régulièrement les chariots, pour satisfaire aux critères posés par les normes, il convient de leur faciliter autant que possible la tâche.

On connaît également par l'intermédiaire du document WO 00/54641 un système d'obturation de fentes pratiqué dans une paroi verticale séparant deux compartiments, comportant pour chaque fente une guillotine amovible mobile entre une position de repos obturant la fente et une position dégagée de ladite fente, le passage de la position dégagée à la position obturée s'effectuant sous l'effet de la gravité, les moyens de couplage de la guillotine et de la paroi comportant au moins un plot faisant saillie de ladite paroi et guidé dans un orifice complexe pratiqué dans la guillotine de telle sorte d'une part que le démontage / remontage de la guillotine de / à la paroi s'effectue manuellement par simple coopération entre le plot et l'orifice, et d'autre part que le déplacement de la guillotine entre les positions obturée et dégagée soit assuré, l'orifice complexe comprenant une première portion de guidage permettant le déplacement de la guillotine entre ses deux positions obturée et dégagée mais non sa désolidarisation du plot, ladite portion de guidage étant liée à une seconde portion de montage / démontage dans laquelle l'opération de solidarisation / désolidarisation du plot et de la guillotine est possible.

C'est le but que se fixe la présente invention, qui propose un système à guillotine externe montable / démontable sans outil et très simplement à / de la paroi comportant les fentes.

Ainsi, l'invention concerne un système d'obturation de fentes selon la revendication 1.

Des configurations avantageuses sont définies par les revendications dépendantes 2-16.

Selon le choix de la partie de l'orifice complexe dans laquelle on se situe, la fonction assurée par la coopération entre le plot et l'orifice sera différente. Dans un cas, il s'agira d'un simple guidage assurant la fonction d'étanchéification entre les compartiments, qu'il y ait ou non un plateau dans la fente, alors que dans l'autre cas, il s'agira de permettre le démontage de la guillotine par exemple en vue de son nettoyage.

Plus précisément, l'orifice complexe comprend une première portion de guidage permettant le déplacement de la guillotine entre ses deux positions obturée et dégagée mais non sa désolidarisation du plot, ladite portion de guidage étant liée à une seconde portion de montage / démontage dans laquelle l'opération de solidarisation / désolidarisation du plot et de la guillotine est possible.

Ces deux portions de l'orifice complexe doivent nécessairement être distinguées, car elles assurent des fonctions complètement différentes.

Selon une possibilité, la portion de guidage et la portion de solidarisation / désolidarisation de l'orifice sont reliées par une portion intermédiaire permettant de les décaler de telle sorte que la position de la guillotine soit favorable à sa manipulation lorsque le plot est dans la portion de solidarisation / désolidarisation, afin de faciliter l'opération de montage / démontage de la guillotine.

Cette caractéristique n'est pas strictement nécessaire à l'accomplissement des fonctions premières du système de l'invention, à savoir le guidage de la guillotine entre ses deux positions d'une part, et sa démontabilité d'autre part, mais elle permet de faciliter la tâche à l'opérateur. Il s'agit bien de l'aspect incitatif dont il a été fait mention auparavant, qui vise à supprimer les obstacles potentiels dans l'accomplissement des tâches de nettoyage / désinfection permettant de satisfaire aux normes actuelles.

Selon une configuration avantageuse, le plot comporte un arbre fixé perpendiculairement à la paroi, dont l'extrémité libre est dotée d'un capuchon de diamètre supérieur à celui de l'arbre.

La configuration de l'orifice complexe dépend bien entendu de la forme qui est donnée au plot saillant.

Ainsi, la portion de guidage, dans l'orifice, consiste en une glissière dont la largeur, sur au moins une partie de sa profondeur, est inférieure au diamètre du capuchon et supérieure à celle de l'arbre du plot.

En coopération avec le plot, son objectif est de permettre un guidage de la guillotine dans une direction d'allure perpendiculaire à la fente, c'est-à-dire en général vertical, pour que le plateau, lors de son insertion, puisse soulever ladite guillotine et que celle-ci puisse le cas échéant redescendre par gravité à son contact.

En revanche, la portion de solidarisation / désolidarisation de l'orifice présente, sur la totalité de sa profondeur, des dimensions supérieures au diamètre du capuchon.

Compte tenu du choix technologique opéré pour la forme du plot, il importe en effet que la partie de ce dernier réalisant la solidarisation, à savoir le capuchon d'extrémité, soit libérable dans la portion de l'orifice dont il est question ici.

Une configuration à symétrie de révolution étant privilégiée pour les différents composants, cette portion de solidarisation / désolidarisation de l'orifice complexe est de préférence prévue cylindrique, et de diamètre bien entendu supérieur à celui du capuchon.

De préférence, la portion intermédiaire de l'orifice complexe consiste en une glissière qui se développe sensiblement parallèlement à l'axe de la fente, débouche à ses deux extrémités respectivement dans la portion de guidage et dans la portion de solidarisation et présente, sur au moins une partie de sa profondeur, une largeur inférieure au diamètre du capuchon et supérieure à celle de l'arbre du plot.

Cette portion intermédiaire sert en fait à permettre d'extraire du chant latéral de la paroi une des extrémités de la guillotine, afin de pouvoir la manipuler plus aisément, comme cela apparaîtra de manière plus claire dans la suite.

Les formes respectives du plot et des différentes portions pourraient permettre l'utilisation d'un orifice complexe non traversant, lequel serait alors doté, dans ses portions de guidage et intermédiaires, au voisinage de son fond, d'une partie de plus grande largeur permettant de loger le capuchon du plot.

De préférence, cependant, l'orifice traverse la guillotine, et ses portions respectivement de guidage et intermédiaire ont une largeur inférieure au diamètre du capuchon et supérieure à celle de l'arbre sur toute leur profondeur.

Cette configuration est notamment beaucoup plus simple à mettre en oeuvre au moment de la solidarisation de la guillotine sur le ou les plots.

Selon une possibilité complémentaire, la glissière formant la portion intermédiaire de l'orifice complexe est centrée par rapport aux portions dans lesquelles elle débouche.

L'orifice complexe, tel qu'il est alors dessiné, prend la forme d'une clef.

Pour favoriser sa manipulation, la guillotine comporte en outre, au voisinage de son extrémité située dans le prolongement de la portion de guidage, un évidement destiné à faciliter sa préhension.

Cet évidement est surtout utile pour procéder au premier mouvement d'extraction, parallèlement à l'axe de la fente. Ensuite, ladite extrémité étant extraite de la paroi, elle offre une prise à l'utilisateur pour procéder au démontage complet de la guillotine.

Dans le système de l'invention, chaque guillotine est disposée dans un évidement de la paroi dans le fond duquel se trouve d'une part la fente et d'autre part la zone de fixation du ou des plots, et dont la profondeur est prévue de telle sorte que, lorsque la guillotine y est solidarisée, elle y est complètement logée, voire affleure la surface externe de la paroi.

Une telle solution s'explique car la mise en oeuvre des guillotines dans la paroi doit occuper un minimum d'espace dans les compartiments pour ne pas détériorer les performances, notamment thermiques, de l'appareil.

Pour permettre l'accès à l'une des extrémités de la guillotine en vue de sa manipulation, cet évidement débouche dans le chant latéral de la paroi.

La démontabilité, avec le système plot / orifice complexe tel que décrit ci-dessus, pourrait également être assuré avec un évidement de longueur supérieur à la longueur de la guillotine, d'une valeur au moins égale à la longueur de la portion intermédiaire de l'orifice, sans que cet évidement ne débouche sur un des chants latéraux de la paroi. Toutefois, dans ce cas, il n'y aurait pas la facilité mentionnée auparavant consistant à pouvoir disposer de l'extrémité de la guillotine afin de faciliter sa manipulation en vue de la monter ou de la démonter.

Pour satisfaire aux normes sanitaires et d'hygiène mentionnées, la guillotine est fabriquée en plastique alimentaire, de même que les plots de fixation.

L'invention concerne également un chariot de stockage et de distribution de plateaux repas comportant une enceinte de stockage séparée par une paroi verticale en deux compartiments maintenus respectivement à haute et à basse température, ladite paroi comportant des fentes dans lesquelles sont insérés les plateaux, lesdites fentes étant obturables par un système tel que décrit ci-dessus.

Il s'agit en fait de l'application préférentielle du système de l'invention, comme nous l'avons souligné auparavant.

Plus particulièrement, dans la plupart des cas, les fentes pratiquées dans la paroi verticale sont disposées horizontalement.

Pour ne pas les endommager, les guillotines du système d'obturation des fentes sont disposées dans le compartiment maintenu à basse température.

Selon une possibilité additionnelle, les plateaux comportent un fond totalement plan, d'épaisseur constante inférieure à la hauteur des fentes, et sont dépourvus de bordure périphérique dans la partie centrale des côtés perpendiculaires à la fente, sur une distance égale à plusieurs fois l'épaisseur de la paroi centrale.

Cette configuration permet un débattement du plateau conférant à l'utilisateur une possibilité de choix de la surface affectée aux aliments à chauffer ou à maintenir froids.

L'invention sera à présent décrite plus en détail, en référence aux figures annexées, pour lesquelles :
- la figure 1 est une vue en perspective d'une guillotine selon l'invention ;
- la figure 2 est une vue, également en perspective, d'une paroi munie de deux jeux de fentes identiques débouchant sur deux chants opposés de ladite paroi, des plateaux équipant les fentes de l'un des jeux ;
- la figure 3 montre un agrandissement d'une extrémité de guillotine du jeu de fentes non pourvues de plateaux de la figure 2 ; et
- la figure 4 montre un agrandissement au niveau du chant latéral du jeu de fentes munies de plateaux.

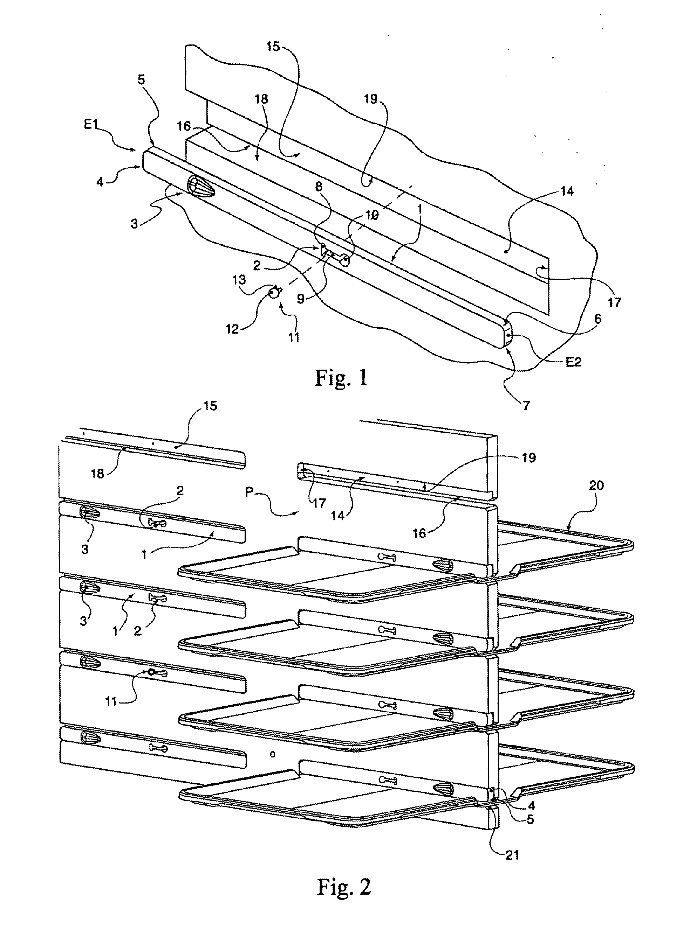

En référence à la figure 1, chaque guillotine (1) est en fait constituée d'une barre allongée, de section sensiblement rectangulaire, pourvue dans sa partie centrale d'un orifice (2) de forme complexe, et, vers l'une de ses extrémités, d'un évidement (3) dont la fonction apparaîtra dans la suite. Les zones de raccordement (4, 5, 6, 7) entre les grands et les petits chants de la guillotine (1) sont arrondies pour des raisons que l'on détaillera également dans la suite de la description. L'orifice complexe (2) se compose d'une portion de guidage (8), d'allure verticale, reliée par une portion intermédiaire (9) d'allure horizontale à une portion cylindrique (10) de diamètre supérieur aux largeurs des deux portions (8, 9) précitées. Ce diamètre doit permettre le passage d'un capuchon (12) d'un plot (11) également muni d'un arbre (13) prévu pour être guidé à l'intérieur des portions de guidage (8) et intermédiaire (9) de l'orifice complexe (2).

Ce plot (11) est destiné à être fixé sur la paroi (P) constituant le fond de l'évidement (14) dans laquelle la guillotine (1) prend place. La totalité du volume de la guillotine (1) est logée dans ledit évidement (14). Celui-ci comporte, en partie basse de la paroi de fond (15), une fente (16) que la guillotine (1) permet d'obturer.

Comme cela apparaît notamment en figure 2, le plot (11) est fixé au fond (15) de telle sorte que, lorsqu'il est logé dans la portion de guidage (8) de l'orifice complexe (2), l'extrémité (E1) de la guillotine reste contenue dans le volume de l'évidement (14), alors que l'extrémité (E2) se trouve pratiquement en butée avec la paroi (17) de l'évidement (14). Le positionnement relatif du plot (11) fixé au fond (15) et de sa portion de guidage (8) dans la guillotine (1) est tel que, lorsque l'évidement (14) est vide, c'est-à-dire par exemple en l'absence de plateaux (20), la guillotine (1) tombe par gravité au contact de la paroi (P) de l'évidement (14). Lorsqu'on remonte la guillotine (1), jusqu'à ce que l'arbre (13) du plot (11) soit par exemple en butée avec l'extrémité inférieure de la portion de guidage (8), la fente (16) est libre d'accès.

Le démontage de la guillotine (1) s'effectue de la manière suivante :
l'utilisateur introduit son doigt dans l'évidement (3) de la guillotine (1), et tire cette dernière vers lui, de telle sorte que l'arbre (13) du plot (11) soit guidé dans la portion intermédiaire (9) de l'orifice complexe (2) jusqu'à arriver dans la portion cylindrique (10). Le diamètre de cette dernière est supérieur au diamètre du capuchon (12) du plot (11). Il suffit alors de centrer ledit plot (11) dans ladite portion cylindrique (10), puis d'écarter la guillotine (1) du fond (15) de l'évidement (14) pratiqué dans la paroi. Une telle opération est facilitée par le fait que l'extrémité (E1) de ladite guillotine (1) est à présent extraite de l'évidement (14), et peut donc être utilisée comme poignée de préhension.

La figure 2 montre, sur sa partie gauche, des guillotines (1) en position de repos au contact de la paroi inférieure (18) de l'évidement (14), c'est-à-dire en position d'obturation de la fente (16). Les guillotines (1) sont bien contenues dans leur totalité dans les évidements (14) pratiqués dans la paroi (P). Dans cette position, il subsiste bien entendu la possibilité de débattement des guillotines (1) vers le haut, permettant de désobstruer les fentes (16). L'arbre (13) des plots (11) se situe dans ce cas dans la partie supérieure de la portion de guidage (8) des orifices complexes (2), afin de permettre de soulever les guillotines (1). Les capuchons (12) des plots (11) empêchent que les guillotines (1) soient démontées lorsqu'elles sont dans ce positionnement.

En partie droite, des plateaux (20) ont été insérés dans les fentes (16), ce qui aboutit à soulever les réglettes (1), en direction de la paroi supérieure (19) de l'évidement (14). Le soulèvement de la guillotine (1) se fait automatiquement à l'insertion, du fait de l'existence d'un des arrondis (4, 5) situés à l'extrémité (E1) et d'un chanfrein (21). La même guillotine (1) étant utilisable sur les deux côtés de la paroi (P), puisqu'elle présente une symétrie par rapport à un plan médian longitudinal, c'est l'arrondi (4) qui peut entrer en premier en contact avec le plateau (20) dans la partie droite de la paroi (P), alors que c'est l'arrondi (5) qui entrerait en l'occurrence en contact avec un plateau (20) en partie gauche. Au fur et à mesure de l'introduction du plateau (20), la guillotine (1) se soulève progressivement, notamment en pivotant initialement par rapport à l'axe constitué par l'arbre (13) logé dans la portion de guidage (8) de l'orifice complexe (2).

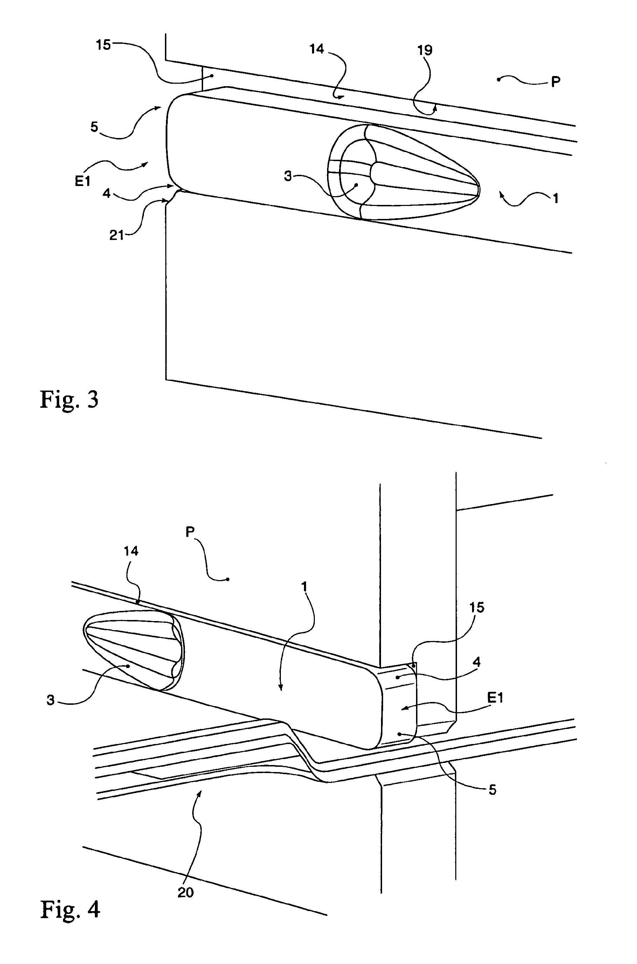

Les figures 3 et 4 sont des agrandissements des extrémités libres des évidements (14) et des guillotines (1), respectivement en l'absence et en présence d'un plateau (20). En figure 3, en l'absence de plateau (20), la guillotine (1) repose sur la paroi inférieure de l'évidement (14). Du côté de son extrémité (E1), l'arrondi (4) coopère avec le chanfrein (21) pour faciliter l'insertion initiale du plateau (20). Cet arrondi (4) et le chanfrein (21) forment en fait ensemble un interstice dans lequel est insérée la bordure externe du plateau (20). Lorsque celui-ci est poussé dans la direction de l'axe de la fente (16), la guillotine (1) est soulevée en direction de la paroi supérieure (19) de l'évidement (14).

En figure 4, un plateau a été inséré dans la fente (16) repoussant la guillotine (1) vers ladite paroi supérieure (19). La guillotine (1), reposant, du fait de la gravité, sur la surface supérieure du plateau (20), toute éventuelle portion de fente (16) non remplie par l'épaisseur du plateau se trouve de fait obturée par la guillotine (1). L'étanchéité entre les compartiments chaud et froid se trouve donc assurée en l'absence de plateaux (20), comme cela ressort de la figure 3, comme en présence de plateaux, comme cela est montré en figure 4.

## Revendications

1. Système d'obturation de fentes (16) pratiqué dans une paroi (P) verticale séparant deux compartiments, comportant pour chaque fente (16) une guillotine (1) amovible mobile entre une position de repos obturant la fente (16) et une position dégagée de ladite fente (16), le passage de la position dégagée à la position obturée s'effectuant sous l'effet de la gravité, les moyens de couplage de la guillotine (1) et de la paroi (P) comportant au moins un plot (11) faisant saillie de ladite paroi (P) et guidé dans un orifice (2) complexe pratiqué dans la guillotine (1) de telle sorte d'une part que le démontage / remontage de la guillotine (1) de / à la paroi (P) s'effectue manuellement par simple coopération entre le plot (11) et l'orifice (2), et d'autre part que le déplacement de la guillotine (1) entre les positions obturée et dégagée soit assuré, l'orifice (2) complexe comprenant une première portion de guidage (8) permettant le déplacement de la guillotine (1) entre ses deux positions obturée et dégagée mais non sa désolidarisation du plot (11), ladite portion de guidage (8) étant liée à une seconde portion (10) de montage / démontage dans laquelle l'opération de solidarisation / désolidarisation du plot (11) et de la guillotine (1) est possible, **caractérisé en ce que** la portion de guidage (8) et la portion de solidarisation / désolidarisation (10) de l'orifice (2) sont reliées par une portion intermédiaire (9) permettant de les décaler de telle sorte que la position de la guillotine (1) soit favorable à sa manipulation lorsque le plot est dans la portion de solidarisation / désolidarisation, afin de faciliter l'opération de montage / démontage de la guillotine (1), ladite portion intermédiaire (9) consistant en une glissière qui se développe sensiblement parallèlement à la fente (16).

2. Système d'obturation de fentes selon l'une quelconque des revendications précédentes, **caractérisé en ce que** le plot (11) comporte un arbre (13) fixé perpendiculairement à la paroi (P), dont l'extrémité libre est dotée d'un capuchon (12) de diamètre supérieur à celui de l'arbre (13).

3. Système d'obturation de fentes selon la revendication précédente,
**caractérisé en ce que** la portion de guidage (8), dans l'orifice (2) complexe, consiste en une glissière dont la largeur, sur au moins une partie de sa profondeur, est inférieure au diamètre du capuchon et supérieure à celle de l'arbre (13) du plot (11).

4. Système d'obturation de fentes selon l'une des revendications 2 ou 3,
**caractérisé en ce que** la portion de solidarisation / désolidarisation (10) de l'orifice (2) présente, sur la totalité de sa profondeur, des dimensions supérieures au diamètre du capuchon (12).

5. Système d'obturation de fentes selon la revendication précédente,
**caractérisé en ce que** la portion de solidarisation / désolidarisation (10) est cylindrique de diamètre supérieur à celui du capuchon (12).

6. Système d'obturation de fentes selon l'une quelconque des revendications 3 à 5, **caractérisé en ce que** la portion intermédiaire (9) de l'orifice (2) complexe consiste en une glissière qui se développe sensiblement parallèlement à l'axe de la fente (16), débouche à ses deux extrémités respectivement dans la portion de guidage (8) et dans la portion de solidarisation (10) et présente, sur au moins une partie de sa profondeur, une largeur inférieure au diamètre du capuchon (12) et supérieure à celle de l'arbre (13) du plot (11).

7. Système d'obturation de fentes selon l'une quelconque des revendications 2 à 6, **caractérisé en ce que** l'orifice (2) traverse la guillotine (1), et ses portions respectivement de guidage (8) et intermédiaire (9) ont une largeur inférieure au diamètre du capuchon (12) et supérieure à celle de l'arbre (13) sur toute leur profondeur.

8. Système d'obturation de fentes selon l'une des revendications 6 ou 7,
**caractérisé en ce que** la glissière formant la portion intermédiaire de l'orifice (2) complexe est centrée par rapport aux portions (8,10) dans lesquelles elle débouche.

9. Système d'obturation de fentes selon l'une des revendications 2 à 8,
**caractérisé en ce que** la guillotine (1) comporte, au voisinage de son extrémité située dans le prolongement de la portion de guidage (8), un évidement (3) destiné à faciliter sa préhension.

10. Système d'obturation de fentes selon la revendication précédente,
**caractérisé en ce que** chaque guillotine (1) est disposée dans un évidement (14) de la paroi (P) dans le fond (15) duquel se trouve d'une part la fente (16) et d'autre part la zone de fixation du ou des plots (11), et dont la profondeur est prévue de telle sorte que, lorsque la guillotine (1) y est solidarisée, elle est contenue dans ledit logement.

11. Système d'obturation de fentes selon la revendication précédente,
**caractérisé en ce que** l'évidemment (14) débouche dans le chant latéral de la paroi (P) du côté de l'extrémité de la guillotine (1) située dans le prolongement de la portion de guidage (8) de l'orifice complexe (2).

12. Système d'obturation de fentes selon l'une quelconque des revendications 2 à 11, **caractérisé en ce que** la guillotine (1) est fabriquée en plastique alimentaire, de même que le ou les plots (11).

13. Chariot de stockage et de distribution de plateaux (20) repas comportant une enceinte de stockage séparée par une paroi verticale (P) en deux compartiments maintenus respectivement à haute et à basse température, ladite paroi comportant des fentes (16) dans lesquelles sont insérés les plateaux, lesdites fentes (16) étant obturées par un système selon l'une quelconque des revendications précédentes.

14. Chariot de stockage et de distribution de plateaux (20) repas selon la revendication précédente, **caractérisé en ce que** les fentes (16) sont horizontales.

15. Chariot de stockage et de distribution de plateaux (20) repas selon l'une des revendications 13 ou 14, **caractérisé en ce que** les guillotines (1) du système d'obturation des fentes (16) sont disposées dans le compartiment maintenu à basse température.

16. Chariot de stockage et de distribution de plateaux (20) repas selon l'une des revendications 13 à 15, **caractérisé en ce que** les plateaux (20) comportent un fond totalement plan, d'épaisseur constante inférieure à la hauteur des fentes (16), et sont dépourvus de bordure périphérique dans la partie centrale des côtés perpendiculaires à la fente (16), sur une distance égale à plusieurs fois l'épaisseur de la paroi centrale.

## Claims

1. System for occluding slots (16) which is constructed in a vertical partition (P) separating two compartments, said system comprising, for each slot (16), a detachable guillotine (1) which can be moved between a rest position which occludes the slot (16) and a position in which the said slot (16) is unblocked, the transition from the unblocked position to the occluded position taking place under the effect of gravity, the coupling means on the guillotine (1) and on the partition (P) comprising at least one stud (11) which projects from the said partition (P) and is guided within a complex orifice (2) constructed in the guillotine (1) in such a way that, on the one hand, the demounting / remounting of the guillotine (1) from / on the partition (P) is carried out manually by simple cooperation between the stud (11) and the orifice (2), and that, on the other hand, displacement of the guillotine (1) between the occluded and unblocked positions is ensured, the complex orifice (2) comprising a first guide portion (8) which permits the displacement of the guillotine (1) between its two occluded and unblocked positions but not its detachment from the stud (11), the said guide portion (8) being linked to a second mounting / demounting portion (10) in which the operation of attaching / detaching the stud (11) and the guillotine (1) is possible, **characterised in that** the guide portion (8) and the attachment / detachment portion (10) of the orifice (2) are connected by an intermediate portion (9) which makes it possible to unwedge them in such a way that the position of the guillotine (1) is favourable to manipulating it when the stud is in the attachment / detachment portion, in order to facilitate the operation of mounting / demounting the guillotine (1), the said intermediate portion (9) consisting in a slide which extends substantially parallel to the slot (16).

2. System for occluding slots according to any of the preceding claims, **characterised in that** the stud (11) comprises a shaft (13) which is fixed perpendicularly to the partition (P) and the free end of which is equipped with a cap (12) which has a diameter greater than that of the shaft (13).

3. System for occluding slots according to the preceding claim, **characterised in that** the guide portion (8) consists, within the complex orifice (2), of a slide whose width, over at least part of its depth, is smaller than the diameter of the cap and greater than the width of the shaft (13) of the stud (11).

4. System for occluding slots according to either of claims 2 or 3, **characterised in that** the attachment / detachment portion (10) of the orifice (2) has, over the whole of its depth, dimensions which are greater than the diameter of the cap (12).

5. System for occluding slots according to the preceding claim, **characterised in that** the attachment / detachment portion (10) is cylindrical with a diameter which is greater than that of the cap (12).

6. System for occluding slots according to any of claims 3 to 5, **characterised in that** the intermediate portion (9) of the complex orifice (2) consists in a slide which extends substantially parallel to the axis of the slot (16), terminates, at its two ends, in the guide portion (8) and in the attachment portion (10) respectively, and has, over at least part of its depth, a width which is smaller than the diameter of the cap (12) and greater than that of the shaft (13) of the stud (11).

7. System for occluding slots according to any of claims 2 to 6, **characterised in that** the orifice (2) passes through the guillotine (1), and its guide portion (8) and intermediate portion (9) have widths which are, respectively, smaller than the diameter of the cap (12) and greater than the width of the shaft (13) over the whole of their depth.

8. System for occluding slots according to either of claims 6 or 7, **characterised in that** the slide that forms the intermediate portion of the complex orifice (2) is centred in relation to the portions (8, 10) in which it terminates.

9. System for occluding slots according to one of claims 2 to 8, **characterised in that** the guillotine (1) comprises, in the vicinity of its end which is situated in the prolongation of the guide portion (8), a recess (3) which is intended to facilitate the gripping of said guillotine.

10. System for occluding slots according to the preceding claim, **characterised in that** each guillotine (1) is disposed within a recess (14) in the partition (P), in the bottom (15) of which recess there are located, on the one hand, the slot (16) and, on the other hand, the zone of fixing of the stud or studs (11), and the depth of which is designed in such a way that, when the guillotine (1) is attached thereto, it is contained within the said housing.

11. System for occluding slots according to the preceding claim, **characterised in that** the recess (14) terminates in the lateral edge of the partition (P) near the end of the guillotine (1) which is situated in the prolongation of the guide portion (8) of the complex orifice (2).

12. System for occluding slots according to any of claims 2 to 11, **characterised in that** the guillotine (1) is made of food-quality plastic, just like the stud or studs (11).

13. Trolley for storing and distributing meal trays (20), comprising a storage enclosure which is separated, by a vertical partition (P), into two compartments which are kept at high and low temperature respectively, the said partition comprising slots (16) in which the trays are inserted, the said slots (16) being occluded by a system according to any of the preceding claims.

14. Trolley for storing and distributing meal trays (20) according to the preceding claim, **characterised in that** the slots (16) are horizontal.

15. Trolley for storing and distributing meal trays (20) according to either of claims 13 or 14, **characterised in that** the guillotines (1) of the system for occluding slots (16) are disposed within the compartment which is kept at low temperature.

16. Trolley for storing and distributing meal trays (20) according to one of claims 13 to 15, **characterised in that** the trays (20) comprise a totally flat bottom with a constant thickness which is lower than the height of the slots (16), and are devoid of a peripheral border in the central part of the sides which are perpendicular to the slot (16), over a distance which is equal to several times the thickness of the central partition.

## Patentansprüche

1. System zum Verschließen von Schlitzen (16), die in einer vertikalen Wand (P) vorgesehen sind, die zwei Abteile trennt, welches für jeden Schlitz (16) eine herausnehmbare Falleinrichtung (1) aufweist, die zwischen einer Ruheposition, in der der Schlitz (16) verschlossen ist, und einer von dem Schlitz (16) entfernten Position beweglich ist, wobei der Übergang von der entfernten zu der verschlossenen Position unter Wirkung der Schwerkraft bewirkt wird, wobei die Mittel zum Verbinden der Falleinrichtung (1) und der Wand (P) wenigstens einen Stift (11) aufweisen, der aus der Wand (P) hervorsteht und in einer komplexen Öffnung (2) geführt wird, die in der Falleinrichtung (1) vorgesehen ist, derart, dass einerseits das Ausbauen / Einbauen der Falleinrichtung (1) aus der / in die Wand (P) manuell durch einfaches Zusammenwirken des Stifts (11) und der Öffnung (2) bewirkt wird, und andererseits das Verschieben der Falleinrichtung (1) zwischen der verschließenden und entfernten Position gewährleistet wird, wobei die komplexe Öffnung (2) einen ersten Führungsabschnitt (8) aufweist, der das Verschieben der Falleinrichtung (1) zwischen ihren zwei Positionen, der verschließenden und der entfernten, ermöglicht, aber nicht deren Lösen von dem Stift, wobei der Führungsabschnitt (8) mit einem zweiten Abschnitt (10) zum Einbauen / Ausbauen verbunden ist, in dem der Vorgang des Verbindens / Lösens des Stifts (11) mit / von der Falleinrichtung (1) möglich ist, **dadurch gekennzeichnet, dass** der Führungsabschnitt (8) und der Einbau-/ Ausbauabschnitt (10) der Öffnung (2) durch einen Zwischenabschnitt (9) verbunden sind, der es ermöglicht, diese derart zu versetzen, dass die Position der Falleinrichtung (1) deren Handhabung erleichtert, während sich der Stift in dem Befestigungs- / Lösungsabschnitt befindet, um den Vorgang des Einbauens / Ausbauens der Falleinrichtung (1) zu erleichtern, wobei der Zwischenabschnitt (9) aus einer Laufschiene besteht, die sich im Wesentlichen parallel zum Schlitz (16) verläuft.

2. System zum Verschließen von Schlitzen gemäß Anspruch 1, **dadurch gekennzeichnet, dass** der Stift (11) eine feststehende Achse (13) senkrecht zur Wand (P) aufweist, deren freies Ende mit einer Kappe (12) versehen ist, deren Durchmesser größer als jener der Achse (13) ist.

3. System zum Verschließen von Schlitzen gemäß dem vorstehenden Anspruch, **dadurch gekennzeichnet, dass** der Führungsabschnitt (8) in der komplexen Öffnung (2) aus einer Laufschiene besteht, deren Breite wenigstens auf einem Teil ihrer Tiefe kleiner ist als der Durchmesser der Kappe und größer ist als jener der Achse (13) des Stifts (11).

4. System zum Verschließen von Schlitzen gemäß einem der Ansprüche 2 oder 3, **dadurch gekennzeichnet, dass** der Befestigungs-/ Lösungsabschnitt (10) der Öffnung (2) auf seiner gesamten Tiefe größere Abmessungen aufweist als der Durchmesser der Kappe (12).

5. System zum Verschließen von Schlitzen gemäß dem vorstehenden Anspruch, **dadurch gekennzeichnet, dass** der Befestigungs-/ Lösungsabschnitt (10) zylindrisch ist und sein Durchmesser größer ist als jener der Kappe (12).

6. System zum Verschließen von Schlitzen gemäß einem der Ansprüche 3 bis 5, **dadurch gekennzeichnet, dass** der Zwischenabschnitt (9) der komplexen Öffnung (2) aus einer Laufschiene besteht, die im Wesentlichen parallel zur Achse des Schlitzes (16) verläuft und an ihren beiden Enden jeweils in den Führungsabschnitt (8) und in den Befestigungsabschnitt (10) mündet und wenigstens auf einem Teil ihrer Tiefe eine Breite aufweist, die kleiner ist als der Durchmesser der Kappe (12) und größer ist als jener der Achse (13) des Stifts (12).

7. System zum Verschließen von Schlitzen gemäß einem der Ansprüche 2 bis 6, **dadurch gekennzeichnet, dass** die Öffnung (2) durch die Falleinrichtung (1) geht, und ihr entsprechender Führungsabschnitt (8) und Zwischenabschnitt (9) über deren gesamte Tiefe eine Breite aufweisen, die kleiner ist als der Durchmesser der Kappe (12) und größer ist als jener der Achse (13).

8. System zum Verschließen von Schlitzen gemäß einem der Ansprüche 6 oder 7, **dadurch gekennzeichnet, dass** die Laufschiene, die den Zwischenabschnitt der komplexen Öffnung (2) bildet, bezogen auf die Abschnitte (8, 10), in denen sie mündet, mittig ist.

9. System zum Verschließen von Schlitzen gemäß einem der Ansprüche 2 bis 8, **dadurch gekennzeichnet, dass** die Falleinrichtung (1) in der Nähe ihres in der Verlängerung des Führungsabschnitts (8) angeordneten Endes eine Aussparung (3) aufweist, die zur Erleichterung des Greifens dient.

10. System zum Verschließen von Schlitzen gemäß dem vorstehenden Anspruch, **dadurch gekennzeichnet, dass** jede Falleinrichtung (1) in einer Aussparung (14) der Wand (P) angeordnet ist, in deren Boden (15) sich einerseits der Schlitz (16) und andererseits die Zone zum Befestigen des oder der Stifte (11) befinden, und deren Tiefe derart vorgesehen ist, dass, wenn die Falleinrichtung (1) damit verbunden ist, sie in dem Sitz enthalten ist.

11. System zum Verschließen von Schlitzen gemäß dem vorstehenden Anspruch, **dadurch gekennzeichnet, dass** die Aussparung (14) in die Seitenkante der Wand (P) auf der Seite des Endes der Falleinrichtung (1), die in der Verlängerung des Führungsabschnitts (8) der komplexen Öffnung (2) angeordnet ist, mündet.

12. System zum Verschließen von Schlitzen gemäß einem der Ansprüche 2 bis 11, **dadurch gekennzeichnet, dass** die Falleinrichtung (1) ebenso wie der oder die Stifte (11) aus einem nahrungsmittelechten Kunststoff hergestellt sind.

13. Wagen zum Lagern und Verteilen von Tabletts (20) für Mahlzeiten, welcher einen Lagerraum aufweist, der mittels einer senkrechten Wand (P) in zwei Abteile geteilt ist, die jeweils bei einer hohen und einer niedrigen Temperatur gehalten werden, wobei die Wand Schlitze (16) aufweist, in die die Tabletts eingesetzt werden, wobei die Schlitze (16) mittels eines Systems gemäß einem der vorstehenden Ansprüche verschlossen werden.

14. Wagen zum Lagern und Verteilen von Tabletts (20) für Mahlzeiten gemäß dem vorstehenden Anspruch, **dadurch gekennzeichnet, dass** die Schlitze (16) waagerecht sind.

15. Wagen zum Lagern und Verteilen von Tabletts (20) für Mahlzeiten gemäß einem der Ansprüche 13 oder 14, **dadurch gekennzeichnet, dass** die Falleinrichtungen (1) des Systems zum Verschließen von Schlitzen (16) in dem Abteil angeordnet sind, das bei niedriger Temperatur gehalten wird.

16. Wagen zum Lagern und Verteilen von Tabletts (20) für Mahlzeiten gemäß einem der Ansprüche 13 bis 15, **dadurch gekennzeichnet, dass** die Tabletts (20) einen vollkommen ebenen Boden aufweisen mit einer gleichbleibenden Dicke, die geringer ist als die Höhe der Schlitze, und sie mit einem umlaufenden Rand in dem mittleren Teil der Seiten senkrecht zum Schlitz (16) mit einem Abstand, der das Mehrfache der Dicke der Mittelwand beträgt, versehen sind.
